# EUROPEAN PATENT SPECIFICATION

(11) **EP 1 013 036 B1**
(45) Date of publication and mention of the grant of the patent: **17.02.2010**
(21) Application number: 99928013.4
(22) Date of filing: 15.06.1999
(51) Int. Cl.: H04L 12/56, H04Q 11/04

(54) **DIGITAL TRAFFIC SWITCH WITH CREDIT-BASED BUFFER CONTROL**
DIGITALER VERKEHRSVERMITTLER MIT KREDITBASIERTER PUFFERSTEUERUNG
COMMUTATEUR NUMERIQUE DE TRAFIC A GESTION DE TAMPON SUR BASE DE CREDIT

(30) Priority: 16.06.1998 US 98228
(43) Date of publication of application: 28.06.2000
(73) Proprietor: Alcatel Lucent, 75008 Paris (FR)
(72) Inventor: HOOGENBOOM, Chris, L., Channel Islands Harbor, CA 93035 (US); HILL, Rex, A., San Diego, CA 92129 (US)
(74) Representative: Schmidt, Werner Karl
(86) International application number: PCT/EP1999/004376
(87) International publication number: WO 1999/066677

(56) References cited:
- EP-A- 0 603 916
- WO-A-97/14240
- LYNN M A ET AL: "THE PRIORITY TOKEN BANK IN A NETWORK OF QUEUES" 1997 IEEE INTERNATIONAL CONFERENCE ON COMMUNICATIONS, MONTREAL, JUNE 8 - 12, 1997, vol. 3, 8 June 1997 (1997-06-08), pages 1387-1391, XP000748872 INSTITUTE OF ELECTRICAL AND ELECTRONICS ENGINEERSISBN: 0-7803-3926-6
- TSANG D H K ET AL: "CREDIT-BASED FAIR QUEUEING FOR ATM NETWORKS" ELECTRONICS LETTERS, vol. 32, no. 25, 5 December 1996 (1996-12-05), page 2306/2307 XP000685308 ISSN: 0013-5194
- R. FAN ET AL.: "Expandable ATOM switch architecture (XATOM) for ATM LANs" PROCEEDINGS OF ICC/SUPERCOMM'94, vol. 1, 1 May 1994 (1994-05-01), - 5 May 1994 (1994-05-05) pages 402-409, XP000438948 new orleans

## Description

### BACKGROUND OF THE INVENTION

The present invention relates to digital traffic switches, and more particularly to input-buffered/output-controlled digital traffic switches.

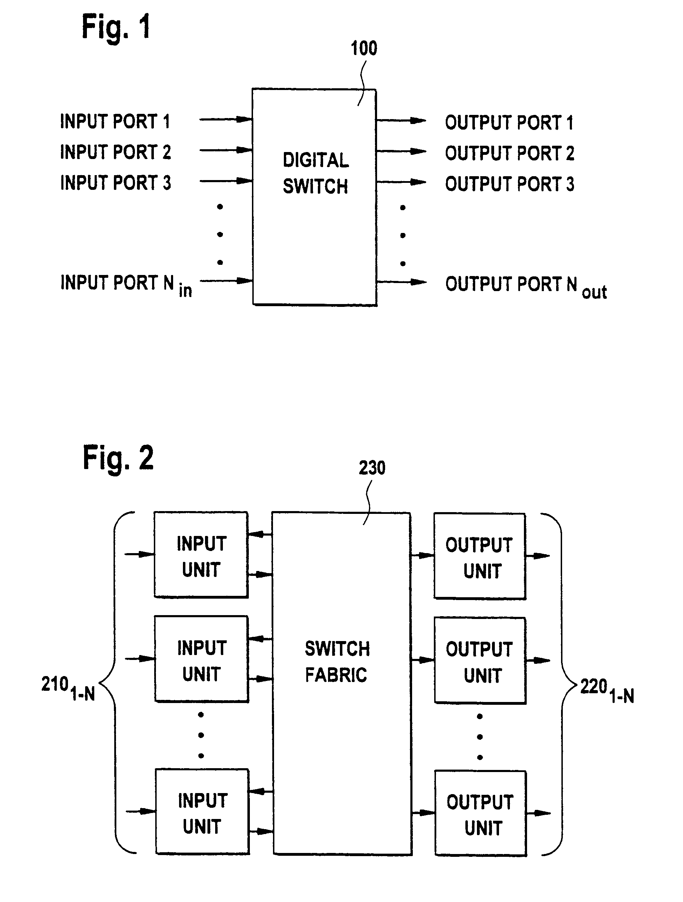

A digital traffic switch takes protocol data units from many sources, and routes them to many destinations. Such a switch may be hardware-based, or hardware- and software-based. The architecture can be generalized as shown in Figure 1. Protocol data units arrive on input ports 1 to Nᵢₙ and are switched through switch 100 to various ones of output ports 1 to N_{out.}

Sometimes, collisions take place between protocol data units. That is, protocol data units come in on two or more input ports that are destined for the same output port. There are two scenarios which describe the condition when two or more protocol data units destined for the same output port collide: (1) momentary contention or collision; and (2) sustained contention or congestion. To minimize collisions, buffering is used. Buffers temporarily store protocol data units while other protocol data units are consuming the resources necessary for delivery of the buffered protocol data unit to the output port.

Buffering may give rise to a another traffic flow problem known as blocking. Blocking occurs when delivery of a protocol data unit is delayed indefinitely because the delivery of other protocol data units is consuming the resources necessary for the delivery of the blocked protocol data unit to the output port. This is referred to as "head of line" blocking. Blocking is undesirable, since it can delay the delivery of the blocked protocol data units and cause them to be overwritten while awaiting release in the buffers, a condition known as "dropping".

Blocking may take several different forms. In asynchronous transfer mode (ATM) switches, blocking may prevent all protocol data units having a relatively low priority from being delivered to the output side, a condition known as "priority blocking". In the case of LAN and WAN packet switches, blocking may prevent all protocol data units having a particular set of packet identifiers from being delivered to the output side, a condition called "flow blocking". And in the case of ATM, LAN or WAN, blocking may prevent all protocol data units arriving on a particular input port from being delivered to the output side, a condition called "port blocking".

To prevent blocking, a switch must implement a strategy for allocating the limited bandwidth available for transmitting protocol data units from the input ports to the output ports. One important aspect of bandwidth allocation is buffer control. Buffer control times the release of protocol data units from buffers for delivery to other buffers on the path between input ports and output ports.

One buffer control strategy buffers protocol data units at the input side and throttles the input buffers based on the availability of output port bandwidth. This is known as input-buffered/output-controlled switching. Protocol data units received at the input side and destined for the output side are buffered at the input side. Traffic load on the output ports is monitored and the protocol data units are released to the output side when the load is sufficiently light. Releasing protocol data units buffered at inputs based on the load status of outputs has advantages. First, input buffering means that protocol data units are dropped before being transmitted across the switch fabric whenever dropping is required, reducing the traffic load on the switch fabric during congested periods. Second, output-controlled release means that the switch may be designed around output port bandwidth limitations, improving scalability. Third, output-controlled release may be used to normalize traffic patterns, i.e., traffic flow on the switch may be accelerated during periods of low traffic and decelerated during periods of high traffic.

Input-buffered/output-controlled ATM switches are known. In such switches, protocol data units are fixed-length "cells" whose release across the switch fabric is usually triggered by a handshaking procedure in which "requests" and "grants" are exchanged on a "per cell" basis. More particularly, the input side buffers inbound cells and transmits to the output side a request to release each input-buffered cell. The request typically specifies type information for the cell, e.g., source input, cell priority, destination output, etc. The output side eventually issues a grant to release the cell across the switching fabric to the destination output port. The ordering of grants has typically been made by running an algorithm which arbitrates among the pending requests based on their specified type whenever bandwidth becomes available. Such switches have eliminated port blocking by running algorithms that issue grants round-robin amona input ports, see, e.a.. Khacherian. U.S. Patent No. 5,768,257.

Another example of an input-output buffered switch is disclosed in EP0603916. In this switch, each output buffer having an idle space larger than a threshold value sends an idle status bit to each input buffer. Each input buffer springs packet destined for such an "idle" output transmits that packet to the output.

Priority blocking, however, has been allowed to persist. Grants to release relatively high priority cells have been issued before grants to release relatively low priority cells. Therefore, whenever the switch is flooded with relatively high priority traffic, no relatively low priority traffic has been delivered.

Clearly, a round-robin allocation of "turns" (e.g., grants) to release among different priorities would not make sense. Prioritization is inherently non-egalitarian: It is supposed to create a "quality of service" hierarchy which provides certain protocol data units more favorable treatment than others. Still, the "all or nothing" approach to allocating turns to release used in known input-buffered/output-controlled ATM switches, which has allowed priority blocking to persist, is not wholly satisfactory. A more sophisticated scheme for allocating turns to release among different priorities is warranted. Such a scheme is also warranted in input-buffered/output-controlled LAN and WAN packet switches to prevent the analogous problem of flow blocking. Stating the problem generally, a better scheme is needed in input-buffered/output-controlled switches for allocating turns among protocol data units entitled to different qualities of service.

### SUMMARY OF THE INVENTION

In its most basic feature, the present invention provides, in an input-buffered/output-controlled switch, a credit-based scheme that allocates turns to release deterministically among groups of protocol data units entitled to different qualities of service.

In one aspect, the input-buffered/output-controlled switch has one or more input units each associated with one or more transmit queues and one or more output ports each associated with one or more receive queues. The input units transmit data to the output ports over a shared switching fabric. Inbound protocol data units destined for different output ports or entitled to different qualities of service are assigned to different transmit queues. The traffic load on receive queues is monitored. Whenever the traffic load on a receive queue is sufficiently light, the receive queue declares a "pay day" by sending a status message to the input units. In response to the "pay day" declaration, the input units distribute "paychecks" to transmit queues which transmit protocol data units to the declaring receive queue. "Paychecks" distributed to different transmit queues contain different amounts of credit depending on the quality of service entitlement of the protocol data units assigned to the transmit queue. Transmit queues are polled in a predetermined order for releasing protocol data units to the receive queue. If a transmit queue has a sufficient of amount of credit when polled, the transmit queue releases a protocol data unit to the receive queue and the amount of credit accumulated by the transmit queue is reduced in relation to the length of the released protocol data unit. If a transmit queue does not have a sufficient amount of credit when polled, the transmit queue does not release a protocol data unit to the receive queue and retains its accumulated credits. The amount of credit distributed to transmit queues in "paychecks" may be arranged such that transmit queues storing protocol data units entitled to a relatively high quality of service are distributed a relatively large amount of credit while transmit queues storing protocol data units entitled to a relatively low quality of service are distributed a threshold amount of credit which is relatively small. By allocating credit in this way, a quality of service hierarchy is preserved while blocking is prevented.

In another aspect, for implementation in a LAN or WAN packet switch, a standard "burst" count is selected for all transmit queues and assigned to the transmit queue whose "turn" it is to release within the predetermined order. The transmit queue releases protocol data units until the "burst" count has been drawn-down to a level where the length of the next packet for release exceeds the remaining "burst" count. The residual portion of the assigned "burst" count, if any, is stored and assigned as extra "burst" on the transmit queue's next "turn" to release. Transmit queue data release rates over a period of sustained operation are thereby made independent of the length of protocol data units presented for release.

In yet another aspect, the receive queues are constructed dynamically within a shared output buffer to accommodate non-uniform traffic patterns.

These and other objects of the present invention may be better understood by reference to the following detailed description, taken in conjunction with the accompanying drawings which are briefly described below. Of course, the actual scope of the invention is defined by the appended claims.

### BRIEF DESCRIPTION OF THE DRAWINGS

Figure 1 is a generalized block diagram of a digital traffic switch;
Figure 2 is a block diagram of a digital traffic switch in which the present invention may be used;
Figure 3 is a block diagram showing in greater detail the control flow between the output flow controller and the input buffer controller, as well as the data flow between the input buffer and the output buffer;
Figure 4 is a flow diagram of a load control algorithm used in a preferred embodiment to declare "pay days"; and
Figure 5 is a flow diagram of a release control algorithm used in a preferred embodiment to order the release protocol data units from the transmit queues to the receive queues.

### DETAILED DESCRIPTION OF THE PREFERRED EMBODIMENT

Referring to Figure 2, the general architecture of a digital traffic switch incorporating the present invention is shown. Multiple input units 210_{(1-N)} and multiple output units 220_{(1-N)} are coupled via a switch fabric 230. Each input unit may have one or more associated input ports and each output unit may have one or more associated output ports such that every input port may communicate with every output port. At any given instant in time, a subset (or all) of the input units 210_{(1-N)} receive digital traffic destined for a subset (or all) of the output units 220_{(1-N)} Digital data traffic may therefore be imagined as flowing from left to right, from input units 210_{(1-N)} to output units 220_{(1-N)}. Data traffic is transmitted in discrete protocol data units. Depending on the protocol operative on the switch, protocol data units may be either variable-length packets or fixed-length cells.

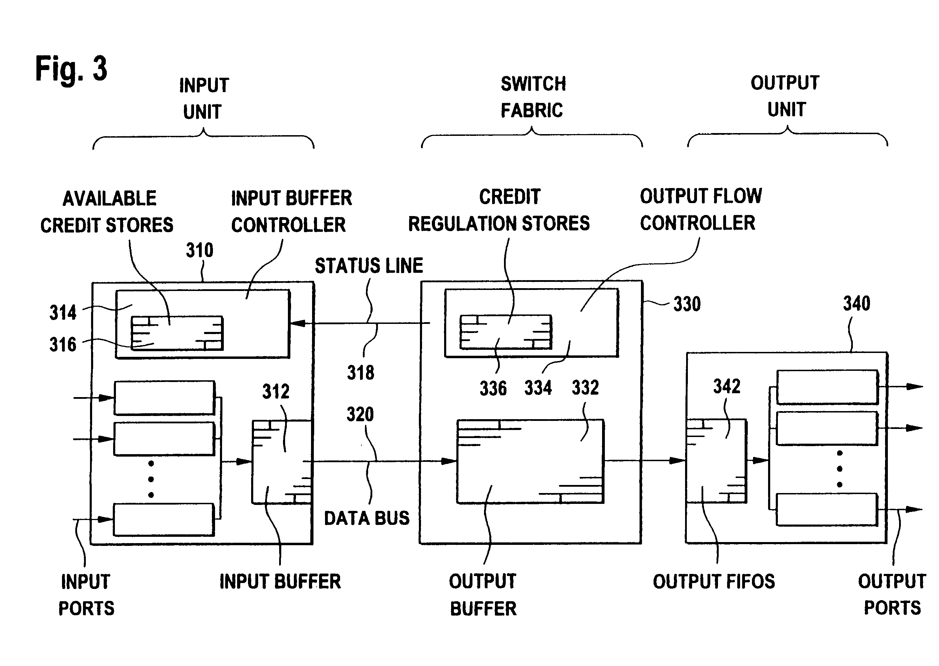

Figure 3 isolates the connections across switching fabric 330 between a representative input unit 310 and a representative output unit 340. Within input unit 310, there is an input buffer 312 which has different transmit queues for storing inbound protocol data units destined for different output ports or entitled to different qualities of service. For a switch supporting L different qualities of service and having U output units each supporting P output ports, the input buffer will have U x P x L transmit queues (residing physically within the input buffer). There is also an input buffer controller 314 which assigns inbound protocol data units to different transmit queues by output port and quality of service entitlement, monitors the available credits for different transmit queues and causes protocol data units to be released from input buffer 312 to output buffer 332. Quality of service may be determined for an inbound protocol data unit by reference to a predetermined set of switching characteristics. In the case of a LAN or WAN packet switch, the determinative quality of service characteristics may include, without limitation, control and routing information found in Layer 2 (media access), Layer 3 (network) and Layer 4 (transport) headers of the protocol data unit, alone or in combination. In the case of an ATM cell switch, determinative quality of service characteristics may include, without limitation, input port and cell priority. Within input buffer controller 314, available credit stores 316 retain the current credit values for different transmit queues. For an input unit supporting U x P x L transmit queues, there will be U x P x L available credit stores each retaining a credit value for a different one of the U x P x L transmit queues.

Within switching fabric 330, there is an output buffer 332 which has different receive queues for storing protocol data units destined for different output ports. For a switch having U output units each supporting P output ports, the output buffer will have U x P logical receive queues (residing physically within the output buffer). Within switch fabric 330, there is also an output flow controller 334 which monitors the traffic load on the different receive queues and causes "pay day" declarations to be issued accordingly. Output flow controller 334 has credit regulation stores 336 for monitoring the current traffic load on the different receive queues. For a switching fabric supporting U x P receive queues, there will be U x P credit regulation stores each retaining a load value for a different one of the receive queues.

Within output unit 340, there are different output FIFOs 342 for storing protocol data units destined for different output ports.

In a preferred embodiment, the resources of output buffer 332 are allocated dynamically with the expedient of a free buffer pointer list in output flow controller 334. Pointers to available address spaces within output buffer 332 are pulled from the front of the free list when a protocol data unit is written to output buffer 332 and are returned to the back of the free list when a protocol data unit is read from output buffer 332. Address spaces holding protocol data units (or portions thereof) destined for the same output port are linked to form a logical receive queues. By employing a shared output buffer in which receive queues are constructed dynamically, non-uniform traffic patterns may be advantageously accommodated by allowing output ports to utilize more than their proportionate share of output buffer 332. Of course, a dedicated output buffering environment wherein each output unit has its own output buffer and output flow controller is also possible. In that event, each output buffer would have P receive queues and P credit regulation stores corresponding to its P output ports. Such a dedicated output buffering environment may have certain scalability advantages relative to a shared output buffering scheme.

Input unit 310 and switching fabric 330 communicate on status line 318 and data bus 320. Status line 318 is used to transmit "pay day" declarations from output flow controller 334 to input buffer controller 314. Each "pay day" declaration includes information sufficient to identify the receive queue to which the "pay day" declaration pertains. A "pay day" declaration is transmitted when the traffic load on a receive queue is found to be below a predetermined threshold. In a preferred embodiment, traffic load is measured by the amount of data in the receive queue awaiting delivery to the receive queue's corresponding output port. "Pay day" declarations may be transmitted in various ways. In a preferred embodiment, status line 318 is a multi-bit bus for transmitting up to one multi-bit "pay day" declaration on each clock cycle. In an alternative embodiment, each receive queue may be assigned a dedicated one-bit line for conveying "pay day" declarations by pulsing or failing to pulse the line high. In yet another alternative embodiment, receive queues may be assigned to one of a plurality of shared one-bit lines for conveying "pay day" declarations and the receive queues sharing a line may be assigned different time slots in a repetitive timing cycle for conveying "pay day" declarations by pulsing or failing to pulse the line on their assigned time slots. Of course, the number of receive queues may determine the relative suitability of the various available techniques for conveying "pay day" declarations. Data bus 320 is used to transmit protocol data units from transmit queues to receive queues.

Output flow controller 334 updates appropriate load values when protocol data units are transmitted from input buffer 312 to output buffer 332 and from output buffer 332 to output FIFOs 342. More particularly, when a protocol data unit is received in a receive queue within output buffer 332, output flow controller 334 increases the load value retained for the corresponding receive queue in relation to the length of the received protocol data unit. When a protocol data unit is transmitted from a receive queue within output buffer 332, output flow controller 334 decreases the load value retained for the corresponding receive queue in relation to the length of the transmitted protocol data unit. In this way, the output flow controller 334 dynamically maintains an accurate view of the traffic load on the various receive queues within output buffer 332. The relationship between protocol data unit length and the load value may be a direct proportion, such that each N-bit data block written to the receive queue may increase the load value by one, and each N-bit data block read from the receive queue may reduce the load value by one.

In a similar vein, input buffer controller 314 updates the appropriate credit values when "pay day" declarations are received from output flow controller 334 and when protocol data units are transmitted from input buffer 312 to output buffer 332. More particularly, when a "pay day" declaration is received, input buffer controller 314 increases the credit values for the transmit queues which transmit protocol data units to the receive queue that transmitted the "pay day" declaration. Credit values are increased in relation to the predetermined quality of service entitlement of the protocol data units assigned to the transmit queue. The amount of credit distributed is arranged such that transmit queues assigned protocol data units entitled to a relatively high quality of service are distributed a relatively large number of credits while transmit queues assigned protocol data units entitled to a relatively low quality of service are distributed a threshold number of credits which is relatively small. When a protocol data unit is transmitted from a transmit queue to a receive queue within output buffer 332, input buffer controller 314 decreases the credit value for the corresponding transmit queue in relation to the length of the transmitted protocol data unit. In this way, the input buffer controller 314 keeps an accurate view of the credits held by the various transmit queues within input buffer 312. The relationship between protocol data unit length and the credit value may be a direct proportion, such that each N-bit data block read from the transmit queue may reduce the credit value by one.

The general buffer control strategy operative in the switch will now be described by reference to the interaction of representative input unit 310 and switch fabric 330. Output flow controller 334 polls receive queues round-robin. "Pay day" declarations are transmitted to input buffer controller 314 when the load on the current receive queue is sufficiently light. The load value for a receive queue is retained in the receive queue's one of credit regulation stores 336. In a preferred embodiment, the load on a receive queue is deemed sufficiently light when the average load value over a predetermined number of clock cycles is below a predetermined threshold. In response to "pay day" declarations, input buffer controller 314 distributes "paychecks" to appropriate transmit queues. Each transmit queue which directs protocol data units to the declaring receive queue is distributed a "paycheck". However, not all "paychecks" have the same amount of credit. The amount of credit in a "paycheck" correlates with the quality of service entitlement of protocol data units assigned to the transmit queue. Input buffer controller 314 deposits "paychecks" in the available credit stores 316 by revising the credit values retained for the appropriate transmit queues upward by the amount of the credit indicated in the "paychecks". Meanwhile, input buffer controller 310 determines the output port and the quality of service entitlement for inbound protocol data units and inbound protocol data units are assigned to transmit queues accordingly. Input buffer controller 310 polls transmit queues round-robin. A protocol data unit is released to the appropriate receive queues from current transmit queue, provided the current transmit queue has a sufficiently large amount of credit. In response to receipt of a protocol data unit, output buffer controller 322 revises the load values retained for the appropriate receive queues upward by the length of the received protocol data unit. Meanwhile, protocol data units are transmitted from receive queues to output FIFOs 342 en route to output ports in a predetermined order, as output port bandwidth becomes available.

Various enhancements of this basic buffer control strategy are possible. Nevertheless, at a fundamental level, this basic buffer strategy is believed to represent a significant advance over the prior art in that "turns" to release protocol data units among transmit queues may be allocated in a wholly deterministic manner. Thus, in a preferred embodiment, credits may be distributed in a manner which ensures that differences in quality of service are amply respected, but prevents blocking. This advantage may be achieved by distributing a higher number of credits to transfer queues assigned protocol data units entitled to relatively high quality of service than to transfer queues assigned protocol data units entitled to relatively low quality of service, while assigning a threshold number of credits to transfer queues assigned protocol data units entitled to the lowest quality of service.

One preferred enhancement to this basic buffer control strategy maximum imposes maximum forwarding rate limits by requiring a predetermined number of clock cycles to expire between "pay check" distributions and setting judicious caps on the number of credits distributed per "pay check" to any one transfer queue.

Another preferred enhancement to the basic buffer control strategy improves fairness in a LAN or WAN packet switch through "burst"-implemented release. A standard "burst" count is selected for all transmit queues and the "burst" count is assigned to the transmit queue whose "turn" it is to release in the round-robin order. The transmit queue releases protocol data units, in this case packets, until the "burst" count has been drawn-down to a level where the length of the next packet for release exceeds the remaining "burst" count. The residual portion of the assigned "burst" count, if any, is stored in a residual "burst" store retained for the transmit queue and is reassigned as extra "burst" on the transmit queue's next "turn" to release. On subsequent "turns", the transmit queue releases packets until the "burst" count plus any residual "burst" from the previous "turn" has been drawn-down. Preferably, the selected "burst" count is large enough to guarantee that at least one packet is released on every "turn". By implementing the foregoing strategy, transmit queue data release rates over a period of sustained operation are made independent of the length of packets presented for release.

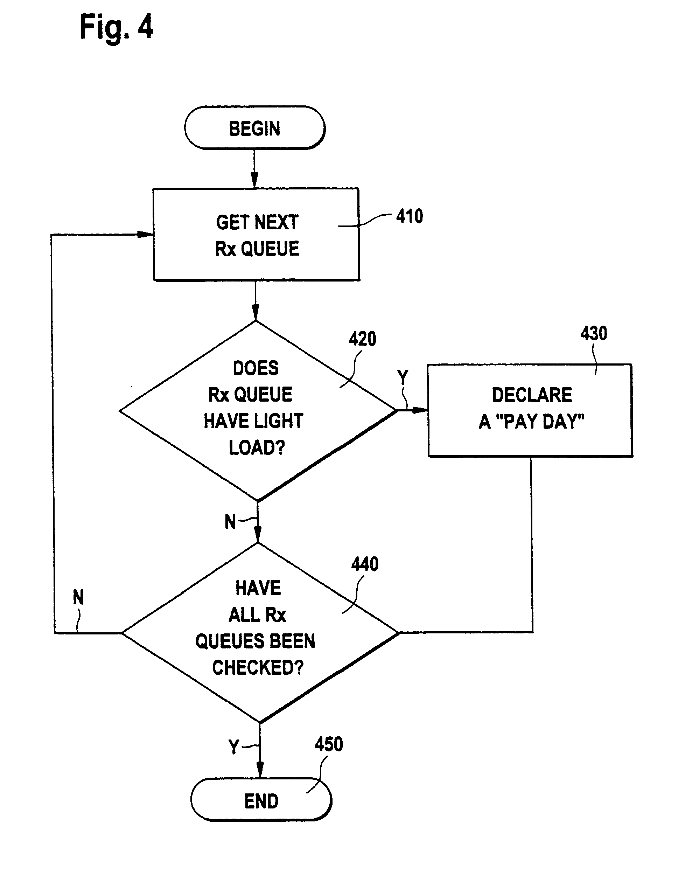

Referring now to Figure 4, the load control algorithm implemented by the output flow controller to declare "pay days" is shown. The current receive queue in round-robin order is selected (410) and the current traffic load on the receive queue is reviewed (420). If the current traffic load is sufficiently light, a "pay day" is declared (430). Whether or not the current traffic load is sufficiently light, a check is made to determine if the current receive queue is the last receive queue (440). If it is, the algorithm is exited (450). If it is not, the next receive queue in the round-robin order is selected (410) and the Step 420 is repeated.

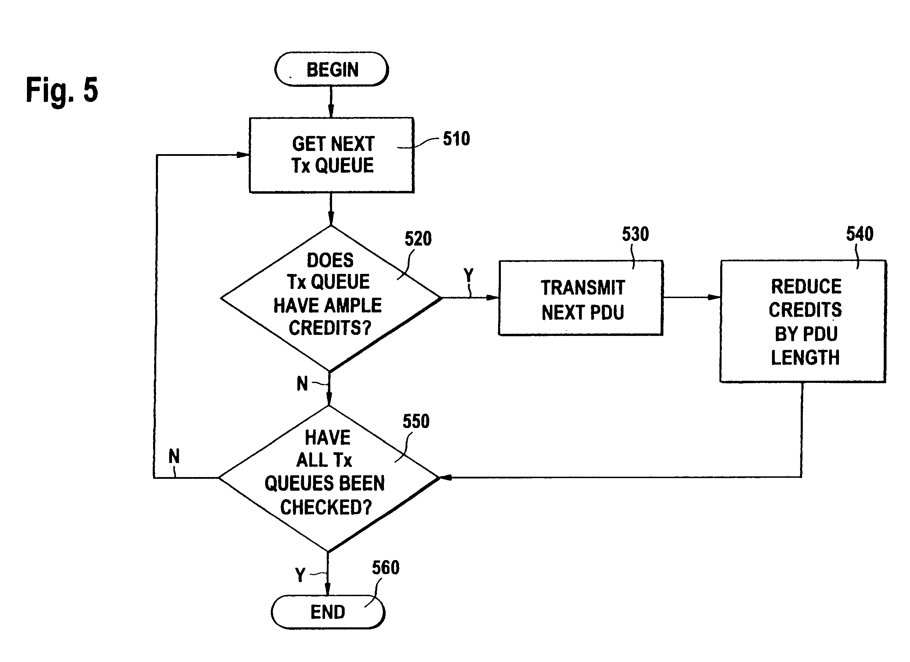

Referring to Figure 5, the release control algorithm implemented by the input buffer controller to release protocol data units is shown. The current transmit queue in a round-robin order is selected (510) and the current credit value for the transmit queue is reviewed (520). If the current credit value is sufficiently high, a protocol data unit is released (530) and the credit value is reduced in relation to the length of the released protocol data unit (540). Whether or not the current credit value is sufficiently high, a check is made to determine if the current transmit queue is the last transmit queue (550). If it is, the algorithm is exited (450). If it is not, the next transmit queue in the round-robin order is selected (510) and the Step 520 is repeated.

The algorithms may be implemented in software using a general purpose microprocessor. More preferably, the algorithms may be implemented in hardware as part of an application specific integrated circuit (ASIC). In the latter instance, the flow diagrams of Figures 4 and 5 describe not the execution of program instructions but the logical operation of the ASIC.

Polling orders other than round-robin polling among transfer queues are possible. For example, transmit queues may be polled according to the relative priority of their assigned protocol data units, such that relatively high priority protocol data units are released before relatively low priority protocol data units until the transmit queues assigned relatively high priority protocol data units no longer have sufficient credit. Priority blocking may be prevented in such an arrangement by imposing maximum forwarding rate limits on transfer queues assigned relatively high priority protocol data units, in a manner such as that heretofore described.

Also, more sophisticated schemes for declaring "pay days" may be implemented. For instance, a plurality of priority-specific thresholds may be assigned to each receive queue, with higher priorities assigned higher thresholds. When the load value exceeds at least one but not all of the thresholds, a selective "pay day" may be declared resulting in the distribution of "pay checks" only to the transmit queues associated with the receive queue that are assigned protocol data units of a priority whose threshold has not been exceeded.

Therefore, it will be appreciated by those of ordinary skill in the art that the invention can be embodied in other specific forms. The present description is therefore considered in all respects illustrative and not restrictive. The scope of the invention is indicated by the appended claims, and all changes that come within the meaning and range of equivalents thereof are intended to be embraced therein.

## Claims

1. A method of controlling buffering of protocol data units, for use within a digital switch (100) having multiple input ports (210_{1-N}), multiple output ports (220_{1-N}), and a switch fabric (330) for switching protocol data units received at any of the input ports (210_{1-N}) to any of the output ports (220_{1-N}), wherein each input port (210_{1-N}) is associated with an input buffer (312) having one or more transmit queues and wherein each output port (220_{1-N}) is associated with an output buffer (332) having one or more receive queues, the method comprising:
(a) receiving protocol data units on input ports (210_{1-N}), the protocol data units each destined for a particular output port (220_{1-N}) ;
(b) assigning the protocol data units to transmit queues;
(c) polling receive queues in a predetermined order, the receive queues each arranged for storing protocol data units destined for a particular output port (220_{1-N});
(d) if the load on a polled receive queue is sufficiently light, assigning credit to each transmit queue associated with the same output port as the polled receive queue;
(e) polling the transmit queues in a predetermined order;
(f) if the polled transmit queue has a sufficient amount of credit, transmitting a protocol data unit from the polled transmit queue to the receive queue associated with the same output port (220_{1-N}) as the polled transmit queue; and
(g) further transmitting the transmitted protocol data unit from the receive queue to the destination output port (220_{1-N}),
**characterized in that**
- in step (b) the transmit queues are each arranged for storing protocol data units destined for a particular output port (220_{1-N});
- in step (d) if the load on a polled receive queue is sufficiently light, a certain amount of credit is assigned to each transmit queue associated with the same output port (220_{1-N}) as the polled receive queue, the amount of credit depending on the quality of service entitlement of the protocol data units assigned to the transmit queue; and
- in step (f) the amount of credit accumulated by the polled transmit queue is reduced in relation to the length of the released protocol data unit.

2. The method according to claim 1, wherein in step (c) the receive queues each comprise a linked list of entries within a shared output buffer (332) arranged to receive protocol data units from particular transmit queues and to transmit the protocol data units to a particular destination output port (220_{1-N}).

3. The method according to claim 2, wherein step (d) further comprises, if the number of entries in a polled receive queue is sufficiently small, assigning credit to each of the particular transmit queues arranged to transmit protocol data units to the polled receive queue.

4. The method according to claim 2 or 3, wherein in step (f) the receive queue is arranged to receive protocol data units from the polled transmit queue.

5. The method according to any of the preceding claims, wherein in step (d) the amount of credit assigned varies among transmit queues.

6. The method according to any of the preceding claims, wherein in step (d) transmit queues for storing protocol data units entitled to a relatively high quality of service are assigned more credit than transmit queues for storing protocol data units entitled to a relatively low quality of service.

7. The method according to any of the preceding claims, wherein in step (d) each transmit queue is assigned a threshold amount of credit.

8. The method according to any of the preceding claims, wherein in step (d) the amount of credit assigned is configurable.

9. The method according to any of the preceding claims, wherein in step (d) the load is measured by comparing the amount of data awaiting transfer to the output port (220_{1-N}) against a predetermined threshold.

10. The method according to any of the preceding claims, wherein in step (c) the receive queues are polled round-robin.

11. The method according to any of the preceding claims, wherein in step (e) the transmit queues are polled round-robin.

12. A digital switch (100) of the type having multiple input ports (210_{1-N}), multiple output ports (220_{1-N}) and a switch fabric (330) for switching protocol data units received at any of the input ports (210_{1-N}) to any of the output ports (220_{1-N}), comprising:
- an input buffer (312) associated with each input port (210_{1-N}), the input buffer (312) having one or more transmit queues;
- an output buffer (332) having one or more receive queues;
- means for receiving protocol data units on the input ports (210_{1-N}), the protocol data units each destined for a particular output port (220_{1-N}) ;
- means for assigning the protocol data units to transmit queues;
- means for polling receive queues in a predetermined order, the receive queues each arranged for storing protocol data units destined for a particular output port (220_{1-N});
- means for assigning credit to each transmit queue associated with the same output port (220_{1-N}) as a polled receive queue having a sufficiently light load;
- means for polling the transmit queues in a predetermined order;
- means for transmitting a protocol data unit from a polled transmit queue having a sufficient amount of credit to the receive queue associated with the same output port (220_{1-N}) as the polled transmit queue; and
- means for further transmitting the transmitted protocol data unit from the receive queue to the destination output port (220_{1-N}),
**characterized in that**
- the transmit queues are each arranged for storing protocol data units destined for a particular output port (220_{1-N}) ;
- the means for assigning credit to each transmit queue associated with the same output port (220_{1-N}) as a polled receive queue having a sufficiently light load assign a certain amount of credit to each transmit queue associated with the same output port (220_{1-N}) as the polled receive queue, the amount of credit depending on the quality of service entitlement of the protocol data units assigned to the transmit queue; and
- that the digital switch (100) comprises means for reducing the amount of credit accumulated by the polled transmit queue in relation to the length of the released protocol data unit.

## Patentansprüche

1. Ein Verfahren zur Puffersteuerung von Protokolldateneinheiten zur Verwendung innerhalb eines digitalen Vermittlers (100) mit mehrfachen Eingangsports (210_{1-N}), mehrfachen Ausgangsports (220_{1-N}) und einer Switch Fabric (330) zum Vermitteln von an einem beliebigen der Eingangsports (210_{1-N}) empfangenen Protokolldateneinheiten an einen beliebigen der Ausgangsports (220_{1-N}), wobei jeder Eingangsport (210_{1-N}) mit einem Eingangspuffer (312) mit einer oder mehreren Übertragungswarteschlangen assoziiert ist, und wobei jeder Ausgangsport (220_{1-N}) mit einem Ausgangspuffer (332) mit einer oder mehreren Empfangswarteschlangen assoziiert ist, wobei das Verfahren umfasst:
(a) Empfangen von Protokolldateneinheiten an Eingangsports (210_{1-N}), wobei eine jede der Protokolldateneinheiten für einen bestimmten Ausgangsport (220_{1-N}) bestimmt ist;
(b) Zuweisen der Protokolldateneinheiten an Übertragungswarteschlangen;
(c) Pollen von Empfangswarteschlangen in einer vorbestimmten Reihenfolge, wobei die Empfangswarteschlangen jeweils für das Speichern von für einen bestimmten Ausgangsport (220_{1-N}) bestimmte Protokolldateneinheiten ausgelegt sind;
(d) wenn die Auslastung einer gepollten Empfangswarteschlange niedrig genug ist, Zuteilen von Kredit an jede mit demselben Ausgangsport wie die gepollte Empfangswarteschlange assoziierte Übertragungswarteschlange;
(e) Pollen der Übertragungswarteschlangen in einer vorbestimmten Reihenfolge;
(f) wenn die gepollte Übertragungswarteschlange über einen ausreichenden Kreditbetrag verfügt, Übertragen einer Protokolldateneinheit von der gepollten Übertragungswarteschlange an die mit demselben Ausgangsport (220_{1-N}) wie die gepollte Übertragungswarteschlange assoziierte Empfangswarteschlange; und
(g) Weiterleiten der übertragenen Protokolldateneinheit von der Empfangswarteschlange an den Zielausgangsport (220_{1-N}),
**dadurch gekennzeichnet, dass**
- in Schritt (b) die Übertragungswarteschlangen jeweils dazu ausgelegt sind, für einen bestimmten Ausgangsport (220_{1-N}) bestimmte Protokolldateneinheiten zu speichern;
- in Schritt (d), wenn die Auslastung einer gepollten Empfangswarteschlange niedrig genug ist, einer jeden mit demselben Ausgangsport (220_{1-N}) wie die gepollte Empfangswarteschlange assoziierten Übertragungswarteschlange ein bestimmter Kreditbetrag zugeteilt wird, wobei der Kreditbetrag von der Dienstgütenberechtigung der der Übertragungswarteschlange zugewiesenen Protokolldateneinheiten abhängig ist; und
- in Schritt (f) der von der gepollten Übertragungswarteschlange angesammelte Kreditbetrag im Verhältnis zur Länge der freigegebenen Protokolldateneinheit verringert wird.

2. Das Verfahren nach Anspruch 1, wobei in Schritt (c) die Empfangswarteschlangen jeweils eine verknüpfte Liste der in einem gemeinsam benutzten Ausgangspuffer (332) eingegangenen Protokolldateneinheiten umfassen, wobei der besagte Ausgangspuffer (332) dazu ausgelegt ist, Protokolldateneinheiten von bestimmten Übertragungswarteschlangen zu empfangen und die Protokolldateneinheiten an einen bestimmten Zielausgangsport (220_{1-N}) weiterzuleiten.

3. Das Verfahren nach Anspruch 2, wobei, wenn die Zahl der Eingänge in einer gepollten Empfangswarteschlange klein genug ist, Schritt (d) weiterhin das Zuteilen von Kredit an eine jede der bestimmten Übertragungsschlangen, welche dazu ausgelegt sind, die Protokolldateneinheiten an die gepollte Empfangsschlange zu übertragen, umfasst.

4. Das Verfahren nach Anspruch 2 oder 3, wobei in Schritt (f) die Empfangswarteschlange dazu ausgelegt ist, Protokolldateneinheiten von der gepollten Übertragungsschlange zu empfangen.

5. Das Verfahren nach einem beliebigen der vorstehenden Ansprüche, wobei in Schritt (d) der Betrag des den Überfragungswarteschlangen zugeteilten Kredits unterschiedlich ist.

6. Das Verfahren nach einem beliebigen der vorstehenden Ansprüche, wobei in Schritt (d) Übertragungswarteschlangen zum Speichern von Protokolldateneinheiten, welche zu einer relativ hohen Dienstgüte berechtigt sind, ein höherer Kredit zugeteilt wird als Übertragungswarteschlangen zum Speichern von Protokolleinheiten, welche zu einer relativ niedrigen Diensgüte berechtig sind.

7. Das Verfahren nach einem beliebigen der vorstehenden Ansprüche, wobei in Schritt (d) jeder Übertragungswarteschlange Kreditbetrag-Grenzwert zugeteilt wird.

8. Das Verfahren nach einem beliebigen der vorstehenden Ansprüche, wobei in Schritt (d) der zugeteilte Kreditbetrag konfigurierbar ist.

9. Verfahren nach einem beliebigen der vorstehenden Ansprüche, wobei in Schritt (d) die Auslastung durch das Vergleichen der Menge von Daten, welche auf eine Übertragung an den Ausgangsport (220_{1-N}) warten, mit einem vorbestimmten Grenzwert gemessen wird.

10. Das Verfahren nach einem beliebigen der vorstehenden Ansprüche, wobei in Schritt (c) die Empfangswarteschlangen reihum gepollt werden.

11. Das Verfahren nach einem beliebigen der vorstehenden Ansprüche, wobei in Schritt (e) die Übertragungswarteschlangen reihum gepollt werden.

12. Ein digitaler Vermittler (100) vom Typ mit mehrfachen Eingangsports (210_{1-N}), mehrfachen Ausgangsports (220_{1-N}) und einer Switch Fabric (330) zum Vermitteln von Protokolldateneinheiten an einem beliebigen der Eingangsports (210_{1-N}) an einen beliebigen der Ausgangsports(220_{1-N}), umfassend:
- Einen Eingangspuffer (312), welcher mit jedem Eingangsport (210_{1-N}) assoziiert ist, wobei der Eingangspuffer (312) eine oder mehrere Übertragungswarteschlangen hat;
- einen Ausgangspuffer (322) mit einer oder mehreren Empfangswarteschlangen;
- Mittel zum Empfangen von Protokolldateneinheiten an den Eingangsports (210_{1-N}), wobei eine jede der Protokolldateneinheiten für einen bestimmten Ausgangsport (220_{1-N}) bestimmt ist;
- Mittel zum Zuweisen der Protokolldateneinheiten an Übertragungswarteschlangen;
- Mittel zum Pollen von Empfangswarteschlangen in einer vorbestimmten Reihenfolge, wobei die Empfangswarteschlangen jeweils für das Speichern von für einen bestimmten Ausgangsport (220_{1-N}) bestimmte Protokolldateneinheiten ausgelegt sind;
- Mittel zum Zuteilen von Kredit an jede mit demselben Ausgangsport (220_{1-N}) wie eine gepollte Empfangswarteschlange mit einer ausreichend niedrigen Belastung assoziierte Übertragungswarteschlange;
- Mittel zum Pollen der Übertragungswarteschlangen in einer vorbestimmter Reihenfolge;
- Mittel zum Übertragen einer Protokolldateneinheit von einer gepollten Übertragungswarteschlange, welche über einen ausreichenden Kreditbetrag verfügt, an die mit demselben Ausgangsport (220_{1-N}) wie die gepollte Übertragungswarteschlange assoziierte Empfangswarteschlange; und
- Mittel zum Weiterleiten der übertragenen Protokolldateneinheit von der Empfangswarteschlange an den Zielausgangsport (220_{1-N}),
**dadurch gekennzeichnet, dass**
- die Übertragungswarteschlangen jeweils dazu ausgelegt sind, für einen bestimmten Ausgangsport (220_{1-N}) bestimmte Protokolldateneinheiten zu speichern;
- die Mittel zum Zuteilen von Kredit an jede mit demselben Ausgangsport (220_{1-N}) wie eine gepollte Empfangswarteschlange mit einer ausreichend niedrigen Belastung assoziierte Übertragungswarteschlange einer jeden mit dem selben Ausgangsport (220_{1-N}) wie die gepollte Empfangswarteschlange assoziierten Übertragungsschlange einen bestimmten Kreditbetrag zuteilen, wobei der Kreditbetrag von der Dienstgütenberechtigung der der Übertragungswarteschlange zugewiesenen Protokolldateneinheiten abhängig ist; und
- der digitale Vermittler (100) Mittel zum Verringern des von der gepollten Übertragungswarteschlange angesammelten Kreditbetrags im Verhältnis zur Länge der freigegebenen Protokolldateneinheit umfasst.

## Revendications

1. Procédé de commande de la mise en tampon d'unités de données de protocole, à utiliser à l'intérieur d'un commutateur numérique (100) comprenant plusieurs ports d'entrée (210_{1-N}), plusieurs ports de sortie (220_{1-N}) et une matrice de commutation (330) pour commuter les unités de données de protocole reçues sur l'un quelconque des ports d'entrée (210_{1-N}) vers l'un quelconque des ports de sortie (220_{1-N}), chaque port d'entrée (210_{1-N}) étant associé à un tampon d'entrée (312) comprenant une ou plusieurs files d'attente d'émission et chaque port de sortie (220_{1-N}) étant associé à un tampon de sortie (332) comprenant une ou plusieurs files d'attente de réception, le procédé comprenant :
(a) Réception d'unités de données de protocole sur les ports d'entrée (210_{1-N}), les unités de données de protocole étant chacune destinée à un port de sortie particulier (220_{1-N}) ;
(b) Affectation des unités de données de protocole aux files d'attente d'émission ;
(c) Interrogation des files d'attente de réception dans un ordre prédéterminé, les files d'attente de réception étant chacune organisée pour stocker les unités de données de protocole destinées à un port de sortie particulier (220_{1-N}) ;
(d) Si la charge d'une file d'attente de réception interrogée est suffisamment faible, affectation d'un crédit à chaque file d'attente d'émission associée au même port de sortie que la file d'attente de réception interrogée ;
(e) Interrogation des files d'attente d'émission dans un ordre prédéterminé ;
(f) Si la file d'attente d'émission possède un niveau de crédit suffisant, émission d'une unité de données de protocole de la file d'attente d'émission interrogée vers la file d'attente de réception associée au même port de sortie (220_{1-N}) que la file d'attente d'émission interrogée ; et
(g) Émission en outre de l'unité de données de protocole émise depuis la file d'attente de réception vers le port de sortie destinataire (220_{1-N}),
**caractérisé en ce que**
- dans l'étape (b), les files d'attente d'émission sont chacune organisée pour stocker les unités de données de protocole destinées à un port de sortie particulier (220_{1-N}) ;
- dans l'étape (d), si la charge d'une file d'attente de réception interrogée est suffisamment faible, un certain niveau de crédit est attribué à chaque file d'attente d'émission associée au même port de sortie (220_{1-N}) que la file d'attente de réception interrogée, le niveau de crédit dépendant de l'allocation de qualité de service des unités de données de protocole affectées à la file d'attente d'émission ; et
- dans l'étape (f), le niveau de crédit totalisé par la file d'attente d'émission interrogée est réduit en fonction de la longueur de l'unité de données de protocole libérée.

2. Procédé selon la revendication 1, selon lequel, dans l'étape (c), les files d'attente de réception comprennent chacune une liste liée d'entrées au sein d'un tampon de sortie (332) partagé organisé pour recevoir les unités de données de protocole de la part de files d'attente d'émission particulières et pour émettre les unités de données de protocole vers un port de sortie destinataire (220_{1-N}) donné.

3. Procédé selon la revendication 2, selon lequel l'étape (d) comprend en outre, si le nombre d'entrée dans une file d'attente de réception interrogée est suffisamment faible, l'affectation d'un crédit à chacune des files d'attente d'émission particulières organisées pour émettre les unités de données de protocole vers la file d'attente de réception interrogée.

4. Procédé selon la revendication 2 ou 3, selon lequel, dans l'étape (f), la file d'attente de réception est organisée pour recevoir les unités de données de protocole de la part de la file d'attente d'émission interrogée.

5. Procédé selon l'une quelconque des revendications précédentes, selon lequel, dans l'étape (d), le niveau de crédit affecté varie entre les différentes files d'attente d'émission.

6. Procédé selon l'une quelconque des revendications précédentes, selon lequel, dans l'étape (d), un crédit plus élevé est affecté aux files d'attente d'émission destinées à stocker des unités de données de protocole auxquelles est alloué un niveau de qualité de service relativement élevé qu'aux files d'attente d'émission destinées à stocker des unités de données de protocole auxquelles est alloué un niveau de qualité de service relativement faible.

7. Procédé selon l'une quelconque des revendications précédentes, selon lequel, dans l'étape (d), un niveau de crédit de seuil est affecté à chaque file d'attente d'émission.

8. Procédé selon l'une quelconque des revendications précédentes, selon lequel, dans l'étape (d), le niveau de crédit affecté est configurable.

9. Procédé selon l'une quelconque des revendications précédentes, selon lequel, dans l'étape (d), la charge est mesurée en comparant la quantité de données en attente de transfert vers le port de sortie (220_{1-N}) avec un seuil prédéterminé.

10. Procédé selon l'une quelconque des revendications précédentes, selon lequel, dans l'étape (c), les files d'attente de réception sont interrogées de manière séquentielle périodique.

11. Procédé selon l'une quelconque des revendications précédentes, selon lequel, dans l'étape (e), les files d'attente d'émission sont interrogées de manière séquentielle périodique.

12. Commutateur numérique (100) du type comprenant plusieurs ports d'entrée (210_{1-N}), plusieurs ports de sortie (220_{1-N}) et une matrice de commutation (330) pour commuter les unités de données de protocole reçues sur l'un quelconque des ports d'entrée (210_{1-N}) vers l'un quelconque des ports de sortie (220_{1-N}) :
- un tampon d'entrée (312) associé à chaque port d'entrée (210_{1-N}), le port d'entrée (312) comprenant une ou plusieurs files d'attente d'émission ;
- un tampon de sortie (332) comprenant une ou plusieurs files d'attente de réception ;
- des moyens pour recevoir des unités de données de protocole sur les ports d'entrée (210_{1-N}), les unités de données de protocole étant chacune destinée à un port de sortie particulier (220_{1-N}) ;
- des moyens pour affecter les unités de données de protocole aux files d'attente d'émission ;
- des moyens pour interroger les files d'attente de réception dans un ordre prédéterminé, les files d'attente de réception étant chacune organisée pour stocker les unités de données de protocole destinées à un port de sortie particulier (220_{1-N}) ;
- des moyens pour affecter un crédit à chaque file d'attente d'émission associée au même port de sortie (220_{1-N}) qu'une file d'attente de réception interrogée ayant une charge suffisamment légère ;
- des moyens pour interroger les files d'attente d'émission dans un ordre prédéterminé ;
- des moyens pour émettre une unité de données de protocole d'une file d'attente d'émission interrogée ayant un niveau de crédit suffisant vers la file d'attente de réception associée au même port de sortie (220_{1-N}) que la file d'attente d'émission interrogée ; et
- des moyens pour émettre en outre l'unité de données de protocole émise depuis la file d'attente de réception vers le port de sortie destinataire (220_{1-N}),
**caractérisé en ce que**
les files d'attente d'émission sont chacune organisée pour stocker les unités de données de protocole destinées à un port de sortie particulier (220_{1-N}) ;
- les moyens pour affecter un crédit à chaque file d'attente d'émission associée au même port de sortie (220_{1-N}) qu'une file d'attente de réception interrogée ayant une charge suffisamment légère affectent un certain niveau de crédit à chaque file d'attente d'émission associée au même port de sortie (220_{1-N}) que la file d'attente de réception interrogée, le niveau de crédit dépendant de l'allocation de qualité de service des unités de données de protocole affectées à la file d'attente d'émission ; et
- que le commutateur numérique (100) comprend des moyens pour réduire le niveau de crédit totalisé par la file d'attente d'émission interrogée en fonction de la longueur de l'unité de données de protocole libérée.
